# EUROPEAN PATENT APPLICATION

(11) **EP 4 257 216 A1**
(43) Date of publication of application: **11.10.2023**
(21) Application number: 20963819.6
(22) Date of filing: 03.12.2020
(51) Int. Cl.: A63F 13/52

(54) **GAME SYSTEM HAVING IMAGE COMPOSITING DISPLAY**

(71) Applicant: Hsu, Tien Shu, Taichung City 407, Taiwan (TW)
(72) Inventor: HSU, Shun Tsung, Taichung City 407 Taiwan (CN); WANG, Chang Yi, Taichung City 407 Taiwan (CN)
(74) Representative: 2K Patentanwälte Blasberg Kewitz & Reichel
(86) International application number: PCT/CN2020/133669
(87) International publication number: WO 2022/116101

(57) **Abstract**

A game system having image compositing display. At least one player of at least one player client bets on a plurality of betting zones within a betting period of time to generate a piece of betting data, respectively; an image capture unit captures a real scene of a physical game result generation unit to obtain an instant image; and then an image identification unit identifies and analyzes the position of the instant image to generate a piece of position information. Therefore, an image compositing processing unit generates a virtuality and reality composite image according to the at least one piece of betting data, the instant image, and the position information, such that a display screen of the at least one player client displays the virtuality and reality composite image, respectively. In this way, the sense of presence during the play at the at least one player client can be increased, and the credibility of a game can be increased.

## Description

### FIELD OF THE INVENTION

The invention relates to a game system, in particular to a game system with image synthesis and display.

### BACKGROUND OF THE INVENTION

The game machine does not need a dealer to avoid human cheating, and manufacturing and management costs are low, therefore it can be suitable for various games such as playing cards, dice and wheels and the like. Costs for players to play the game machine are also low, and the players are able to play online games in single-player games and remote multi-player modes, so that the game machine is widely welcomed by the players and producers.

However, if the game machine does not use a physical game result generation unit, such as a physical playing card, a physical die or a physical roulette, etc., the player may not have a live play experience. The game result generation unit used by the game machine is a virtual messy number generator. Although it has been officially certified to increase the credibility, the players will still have doubts about whether the system is cheating if there is no expected result after playing for a long time, and the players' interest in playing will be greatly reduced when the players have doubts on whether the game is fair.

For example, an automated card dealing system described in U.S. Patent No. 9,744,437, which retains a real playing card face, automatically handles dealing, receiving, and shuffling through the system, thus not only rendering the doubt of human cheating or system cheating, but also being quite temporary, can greatly increase the credibility and appeal of the game.

For a player playing the game remotely, the physical game result generation unit can only be monitored through the display screen which is additionally arranged and live online. However, the players playing the game at the far end should pay attention to the on-line live display screen of the display screen while operating the game console so as to master the instant betting information and the game result so as to meet the on-site participation enjoyment. Therefore, the player playing the game at the far end needs to watch the display screen and the display screen of the game console at the same time with distraction, so that the player spends considerable mind and easily feels tired to reduce the time of the game.

### SUMMARY OF THE INVENTION

The invention mainly aims to provide a game system, which enables a display screen at a player end to display a virtual real synthetic image, enables the player to simultaneously master the scoring information while watching an instant image of a physical game result generation unit, thereby increasing the presence and reducing the mental and psychological burden during playing.

In order to achieve the purpose, the invention provides a game system with image synthesis and display, which comprises a game processing unit, at least one player end, a physical game result generation unit, an image acquisition unit, an image identification unit, an image synthesis processing unit and a scoring payout unit. The game processing unit controls an operation of a game for at least one player to play the game; each player end includes a display screen to display a game picture of the game, the game picture includes a plurality of scoring areas and a plurality of odds corresponding to the plurality of scoring areas, the at least one player end respectively provides the at least one player to play the game for selecting and making scoring on the plurality of scoring areas within a scoring time to generate a scoring information, and the at least one player end respectively transmits the scoring information to the game processing unit; the physical game result generation unit is notified by the game processing unit to generate a game result according to a preset rule after the scoring time of each round of the game has expired, and the physical game result generation unit transmitts the game result to the game processing unit. The scoring payout unit pays according to the scoring information of the at least one player, the game result and the plurality of odds in each round of the game.

The image acquisition unit shoots a real scene of the physical game result generation unit to obtain an instant image, the image acquisition unit transmits the instant image to the game processing unit; the image identification unit receives the instant image from the game processing unit, the image identification unit recognizes and analyzes a position of the instant image to generate a position information, and the game processing unit transmits the position information back to the game processing unit. After the game processing unit receives the at least one scoring information, the image synthesis processing unit receives the at least one scoring information, the instant image and the position information from the game processing unit; and the image synthesis processing unit generates a virtual real synthetic image according to at least the scoring information, the instant image and the position information, and the virtual real synthetic image is transmitted by the game processing unit to the at least one player end to display the virtual real synthetic image on the display screen of the at least one player ends respectively.

Accordingly, the virtual real synthetic image is respectively displayed on the display screen of the at least one player end, wherein the information of the virtual real synthetic image includes the at least one scoring information, the instant image and the position information, and the instant image is a real scene of the physical game result generation unit. And the value of the at least one scoring information can be correctly displayed and synthesized on the instant image according to the position information. Therefore, through the virtual real synthetic image, the player can master the numerical value of the at least one scoring information, has the on-site feeling of on-site play so as to satisfy the on-site participating fun, and can reduce the mental and mental burden during play.

### BRIEF DESCRIPTION OF THE DRAWINGS

Fig. 1 is a block diagram of a system of the present invention.
Fig. 2 is a schematic diagram of a game console at a player end of the present invention.
Fig. 3 is a schematic diagram of a physical game result generation unit of the present invention.
Figs. 4A, 4B, 4C, and 4D are schematic diagrams of a game applied to a roulette wheel.
Fig. 5 is a flow chart showing a game operation according to a first embodiment of the present invention.
Fig. 6 is a flow chart showing a game operation according to a second embodiment of the present invention.
Fig. 7 is a schematic diagram of a virtual real synthetic image of the present invention applied to Baccarat.
Fig. 8 is a schematic diagram of a virtual real synthetic image of the present invention applied to a dice.
Fig. 9 is a block diagram of another embodiment of the present invention.

### DETAILED DESCRIPTION OF THE PREFERRED EMBODIMENTS

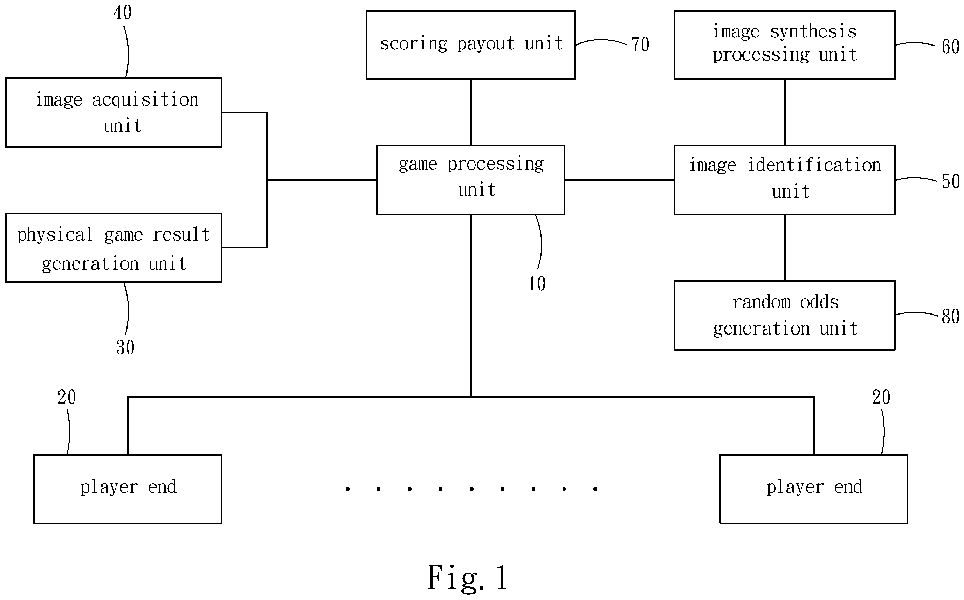

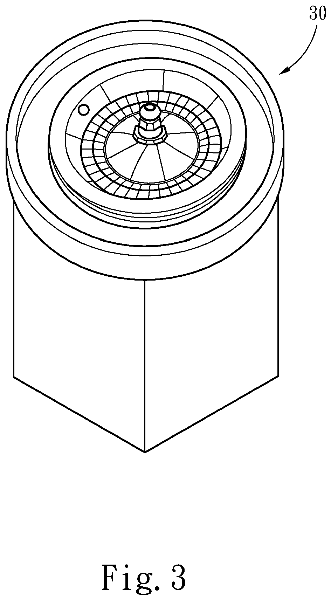

The detailed description and technology of the present disclosure, taken in conjunction with the accompanying drawings, is as follows:
Refer to Fig. 1, Fig. 2 and Fig. 3, the present invention provides a game system comprising a game processing unit 10, at least one player end 20, a physical game result generation unit 30, a image acquisition unit 40, a image identification unit 50, a image synthesis processing unit 60 and a scoring payout unit 70. The game processing unit 10 controls the operation of a game for at least one player to play the game. The physical game result generation unit 30 is shown in Fig. 3, and in one embodiment, an example of a roulette wheel is illustrated.

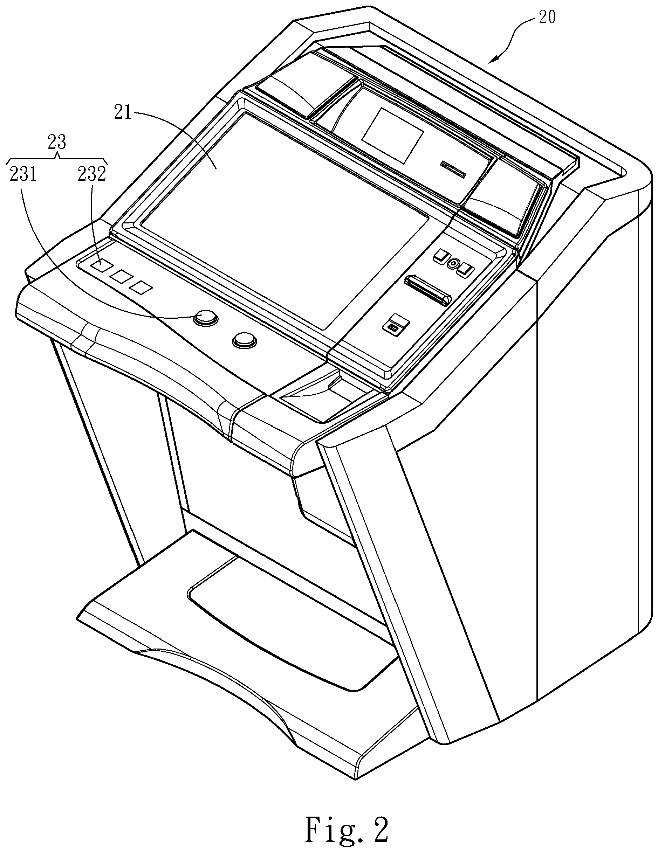

Refer to Fig. 1, Fig. 2 and Fig. 4A, in one embodiment, each player end 20 is a game console for the player to play. The player end 20 includes a display screen 21 that displays a game picture 22 of the game, and the game picture 22 displays an instant image 41 captured from the image acquisition unit 40. The game picture 22 includes a plurality of scoring areas 221 and a plurality of odds 222 corresponding to the plurality of scoring areas 221 (only part of the plurality of odds 222 will be displayed for simplicity of screen display). In one embodiment, the at least one player end 20 respectively provides the at least one player to play the game, and the at least one player can select and make scoring on the plurality of scoring areas 221 within a scoring time to respectively generate at least one scoring information. In this embodiment, the at least one scoring information is displayed on the scoring areas 221 in an image form of at least one chip 223. As shown in Fig. 2, the at least one player end 20 includes a game operation interface 23 which is provided for the at least one player to operate so as to generate an operation information; and the at least one game operation interface 23 is provided with a plurality of scoring options 231 and at least one function operation option 232 for making scoring on the plurality of scoring areas 221. The operation information includes a function control signal and the at least one scoring information. The function control signal is provided for controlling the operation of the game system, and to be generated by the player operating the at least one function operation option 232. The at least one player controls the operation of the game system by generating the function control signal, such as starting a game, exiting a game, watching a game instruction and the like. The at least one scoring information is generated by the at least one player operating the plurality of scoring options 231. In practice, in one embodiment, the display screen 21 is a touch screen which can be switched to the plurality of scoring areas 221 in a touch manner.

The at least one player end 20 transmits the at least one scoring information to the game processing unit 10 which notifies the physical game result generation unit 30 to transmit the game result to the game processing unit 10 according to a preset rule after the scoring time of each round of the game has expired. Then, the scoring payout unit 70 pays according to the at least one scoring information of the at least one player, the game result, and the plurality of odds 222 in each round of the game.

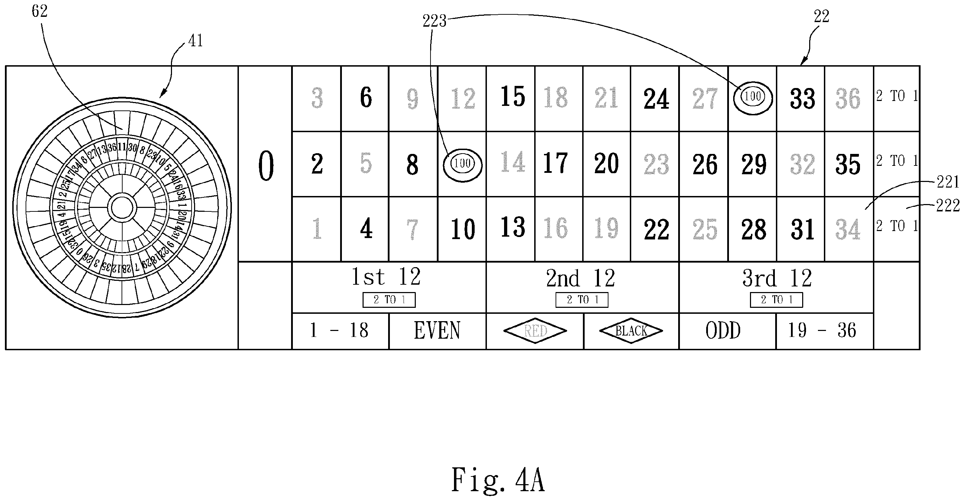

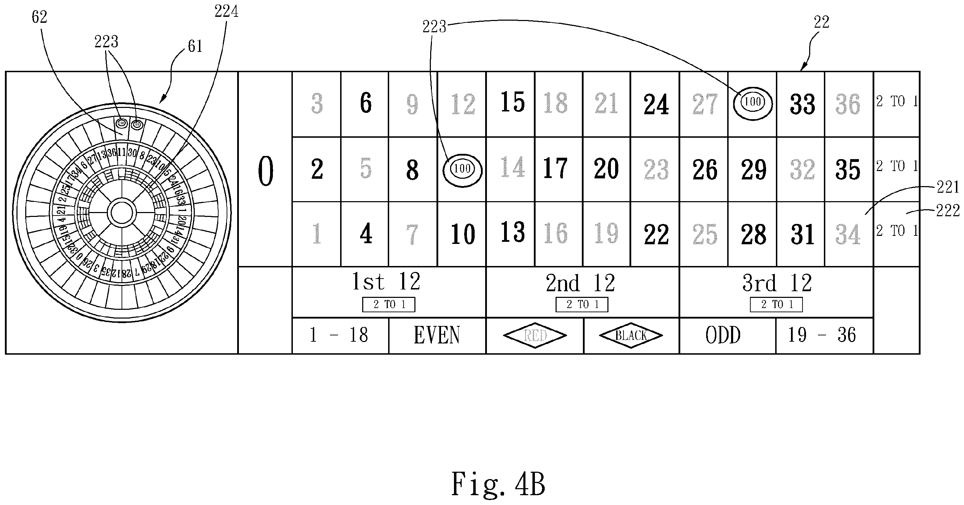

Refer to Fig. 1, Fig. 3 and Fig. 4B, the image acquisition unit 40 shoots a real scene of the physical game result generation unit 30 to obtain the instant image 41 and displays the instant image 41 in the game picture 22 (as shown in Fig. 4A). The image acquisition unit 40 transmits the instant image 41 to the image identification unit 50 via the game processing unit 10, so that the image identification unit 50 recognizes and analyzes a position of the instant image 41 to generate a position information which is transmitted back to the game processing unit 10 through the game processing unit 10. The game processing unit 10 transmits the at least one scoring information, the instant image 41 and the position information to the image synthesis processing unit 60 after receiving the at least one scoring information; and the image synthesis processing unit 60 generates a virtual real synthetic image 61 (shown in FIG. 4B) according to the at least one scoring information, the instant image 41 and the position information. In more detail, position of the instant image 41 is known from the position information, so that the image synthesis processing unit 60 superimposes and synthesizes an image of the at least one chip 223 corresponding to the at least one scoring information on the instant image 41 to generate the virtual real synthetic image 61. The virtual real synthetic image 61 includes the instant image 41 (the real scene of the physical game result generation unit 30) and the at least one scoring information of the at least one player, wherein the at least one scoring information of the at least one player is displayed in an image form of the at least one chip 223. In one embodiment, the at least one scoring information of the at least one player is represented by displaying a proportional scoring amount 224, wherein the proportional scoring amount 224 is score statistics of the at least one player for the plurality of scoring areas 221, expressed in terms of the number of crossbars. In practice, the image of the at least one chip 223 shows the at least one scoring information of only one player; and an image of the proportional scoring amount 224 shows the at least one scoring information of all players, whereby the at least one player can clearly know the proportional scoring amount 224 in each of the plurality of scoring areas 221 as a reference for scoring. Further, the image synthesis processing unit 60 transmits the virtual real synthetic images 61 to the at least one player end 20 via the game processing unit 10, so that the display screen 21 of the at least one player end 20 displays the virtual real synthetic images 61.

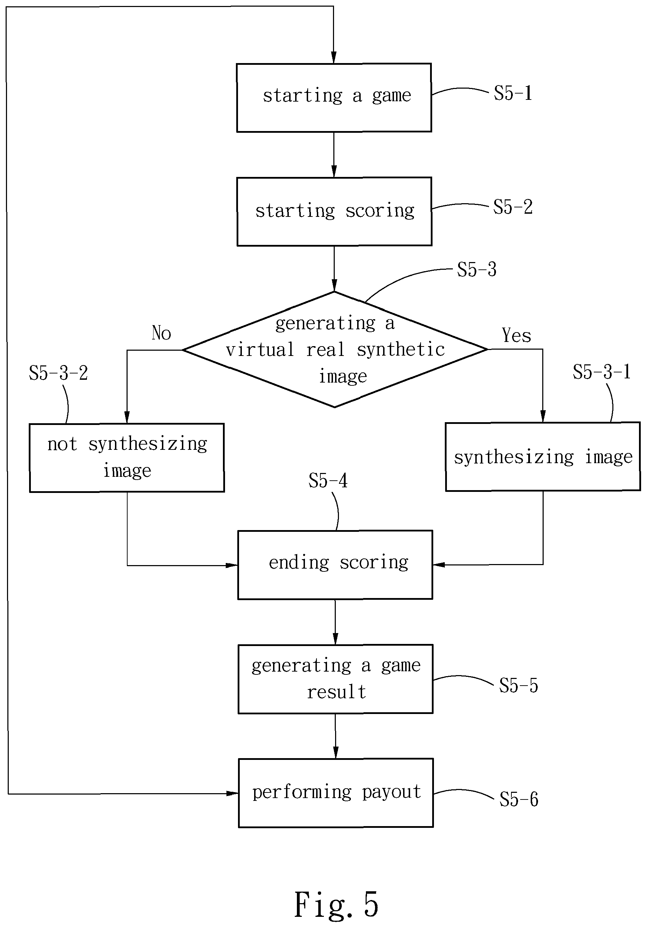

Refer to Fig. 5, a flow chart of a game operation according to a first embodiment of the present invention is shown, including step S5-1: starting a game, step S5-2: starting scoring, step S5-3: generating a virtual real synthetic image, step S5-3-1: synthesizing image, step S5-3-2: not synthesizing image, step S5-4: ending scoring, step S5-5: generating a game result, and step S5-6: performing payout. After the game is started in step S5-1, step S5-2 is entered that the at least one player selects and makes scoring on the plurality of scoring areas 221 within the scoring time to generate the at least one scoring information. After that, step S5-3 is entered. In step S5-3, if the at least one scoring information is generated by the at least one player, and the at least one scoring information is transmitted from the at least one player end 20 to the game processing unit 10, step S5-3-1 is executed. In step S5-3-1, the virtual real synthetic image 61 is generated by the image synthesis processing unit 60 according to the at least one scoring information, the instant image 41 (shown in Fig. 4A), and the position information, and the virtual real synthetic image 61 is displayed on the display screen 21 (the game picture 22) of the player end 20, as shown in Fig. 4B. The virtual real synthetic image 61 displays the instant image 41 of the physical game result generation unit 30, and a status of the at least one scoring information that representing the at least one player makes scoring on the plurality of scoring areas 221(e.g. a distribution status of the at least one chip 223).

In addition, the real scene of the real game result generation unit 30 includes a plurality of frames 62 corresponding to the plurality of scoring areas 221, as shown in Fig. 4A, so that the instant image 41 includes the plurality of frames 62. That is, the image synthesis processing unit 60 reproduces the real scene on the virtual real synthetic image 61 (the plurality of frames 62 as shown in Fig. 4B), and the at least one scoring information is displayed on the plurality of frames 62 of the virtual real synthetic image 61. In one embodiment, the proportional scoring amount 224 is respectively displayed via the at least one chip 223 or according to a ratio of the at least one scoring information (as shown in Fig. 4B). In another embodiment, the image synthesis processing unit 60 updates the virtual real synthetic image 61 according to the at least one scoring information which is the latest, if the at least one scoring information changes during the scoring time, i.e., the plurality of frames 62 of the virtual real synthetic image 61 display the at least one scoring information that remains up-to-date.

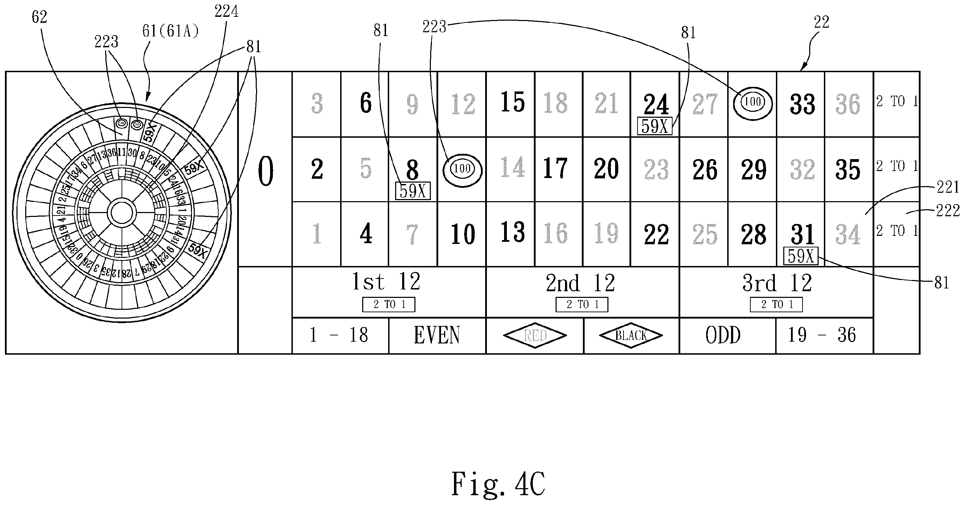

Refer to Fig. 1 and Fig. 4C, in another embodiment, the game system further comprises a random odds generation unit 80 which generates a random odds 81 according to a random probability to each of the plurality of scoring areas 221 after the scoring time of each round of the game has expired. The random odds generation unit 80 transmits the random odds 81 to the game processing unit 10. The game processing unit 10 notifies at least one game picture 22 to replace the odds 222 of the scoring area 221 with the random odds 81 correspondingly, and the scoring payout unit 70 pays according to the at least one scoring information of the at least one player, the game result, and the plurality of odds 222 and the random odds 81. After the game processing unit 10 receives the random odds 81, the image synthesis processing unit 60 generates another virtual real synthetic image 61A according to the instant image 41 (as shown in Fig. 4A), the position information and the random odds 81. Likewise, the image synthesis processing unit 60 reproduces the real scene in the virtual real synthetic image 61A, and the random odds 81 are displayed on the plurality of frames 62 of the virtual real synthetic image 61A. In practice, two virtual real synthetic images 61, 61A are displayed as superimposed, i.e., the random odds 81 and the at least one scoring information of the at least one player (e.g., the distribution of the at least one chip 223) may be displayed simultaneously on a single screen (as shown in Fig. 4C).

If the at least one scoring information is not generated by the at least one player, step S5-3-2 is performed in order to save operation time and enhance efficiency of the image synthesis processing unit 60. After step S5-3-1 or step S5-3-2 is performed, step S5-4 is entered that ending scoring. The step S5-5 is performed to generate the game result via the physical game result generation unit 30, after step S5-4. Finally the step S5-6 is performed, the scoring payout unit 70 pays according to the at least one scoring information of the at least one player, the game result and the plurality of odds 222.

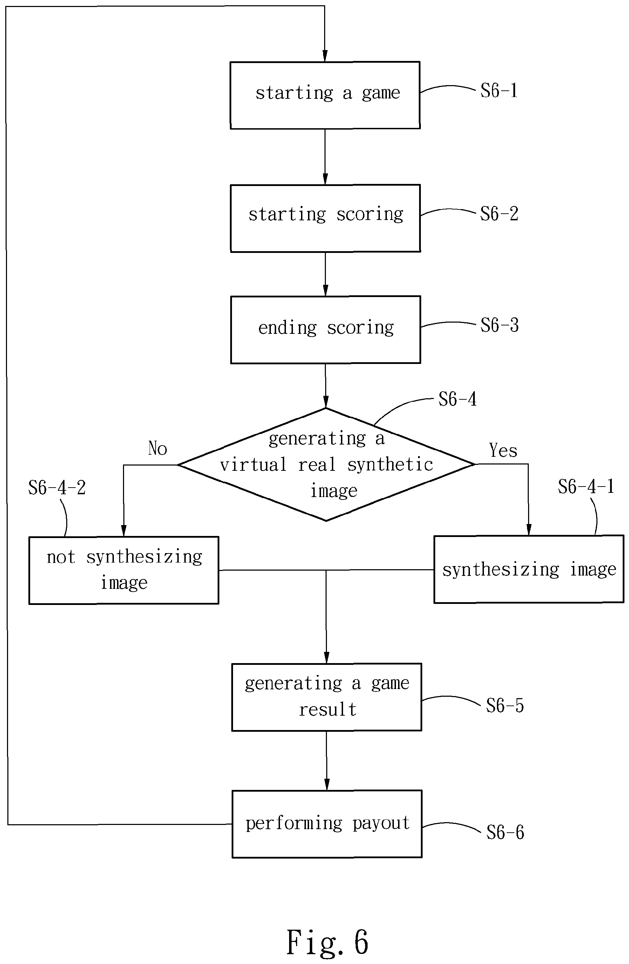

Refer to Fig. 6, a flow chart of a game operation according to a second embodiment of the present invention is shown, including step S6-1: starting the game, step S6-2: starting scoring, step S6-3: ending scoring, step S6-4: generating a virtual real synthetic image, step S6-4-1: synthesizing image, step S6-4-2: not synthesizing image, step S6-5: generating a game result, and step S6-6: performing payout. Compared with the first embodiment, in the second embodiment, the image synthesis processing unit 60 generates the virtual real synthetic image 61 only after the scoring time has expired, thereby reducing the computational burden of the image synthesis processing unit 60.

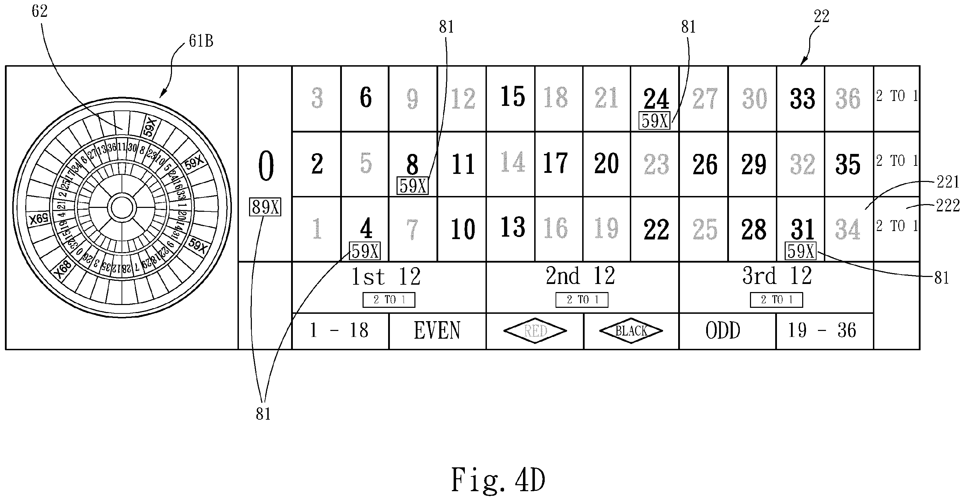

Refer to Fig. 1 and Fig. 4D, the second embodiment also includes the random odds generation unit 80 which generates the random odds 81, such that the scoring payout unit 70 pays according to the at least one scoring information of the at least one player, the game result, the plurality of odds 222, and the random odds 81. After the game processing unit 10 receives the at least one scoring information or the random odds 81, the image synthesis processing unit 60 generates a virtual real synthetic image 61B based on the instant image 41 (as shown in Fig. 4A), the position information, the at least one scoring information and the random odds 81. That is, if there is the random odds 81 without at least one scoring information, the virtual real synthetic image 61B is still generated and displayed on the display screen 21 of the at least one player end 20, as shown in Fig. 4D; thereby the effect of attracting the at least one player to play is achieved by displaying the random odds 81. In addition, the real scene of the real game result generation unit 30 includes the plurality of frames 62 corresponding to the plurality of scoring areas 221, and the image synthesis processing unit 60 reproduces the real scene in the virtual real synthetic image 61B and displays the random odds 81 in the plurality of frames 62 of the virtual real synthetic image 61B, as shown in Fig. 4D.

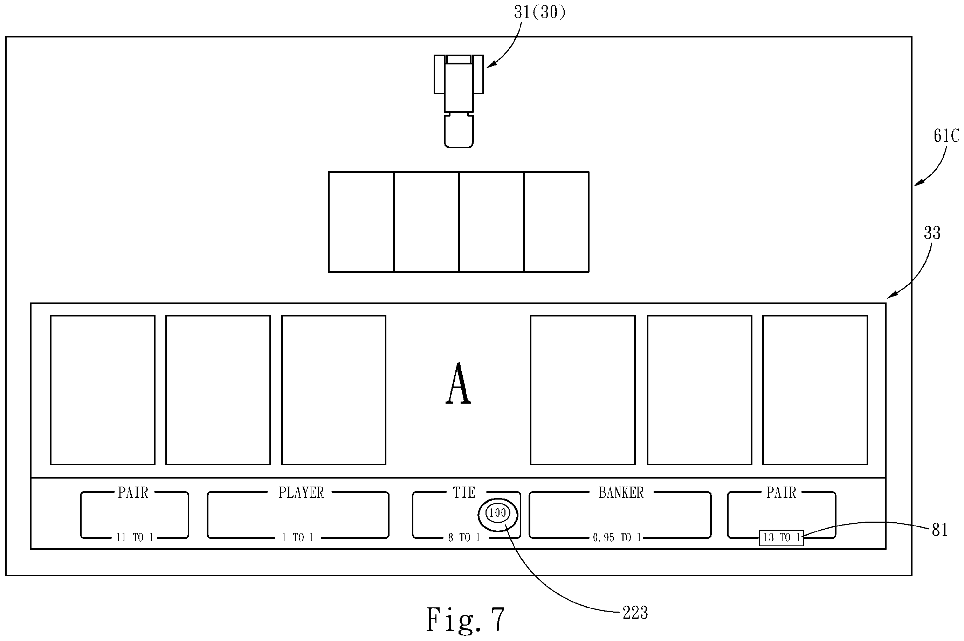

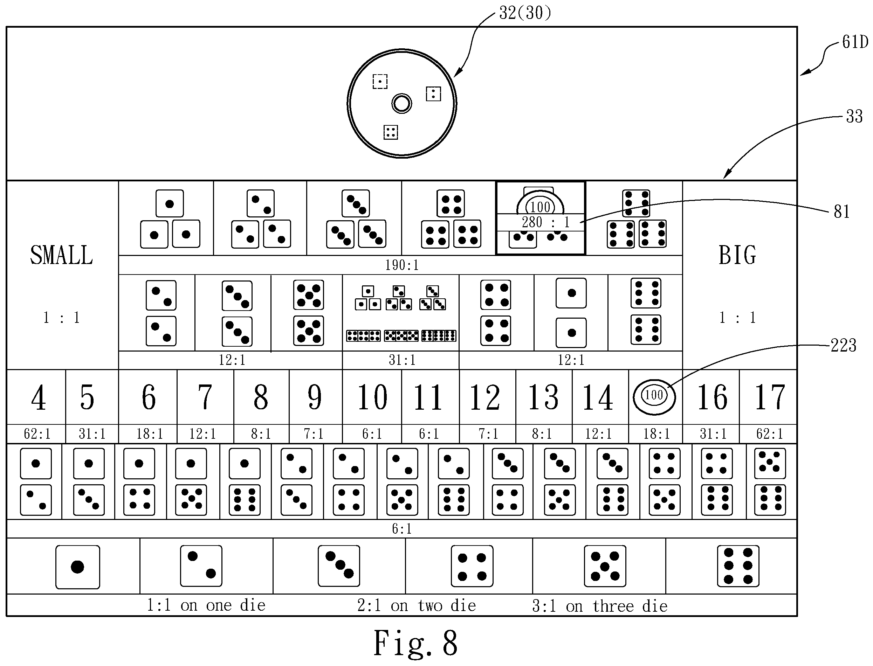

Further, in other embodiments, as shown in Fig. 7 or Fig. 8, the physical game result generation unit 30 is an automatic dealing device 31 applied to a Baccarat game (as shown in Fig. 7); or an automatic die shaking device 32 applied to a dice game (as shown in Fig. 8). Accordingly, the real scene of the physical game result generation unit 30 additionally includes a physical scoring table 33 corresponding to the plurality of scoring areas 221 (as shown in Fig. 4A), and the real scene may be reproduced on virtual real synthetic images 61C, 61D while the random odds 81 or the at least one scoring information is displayed on the physical scoring table 33 of the virtual real synthetic images 61C, 61D, as shown via the at least one chip 223.

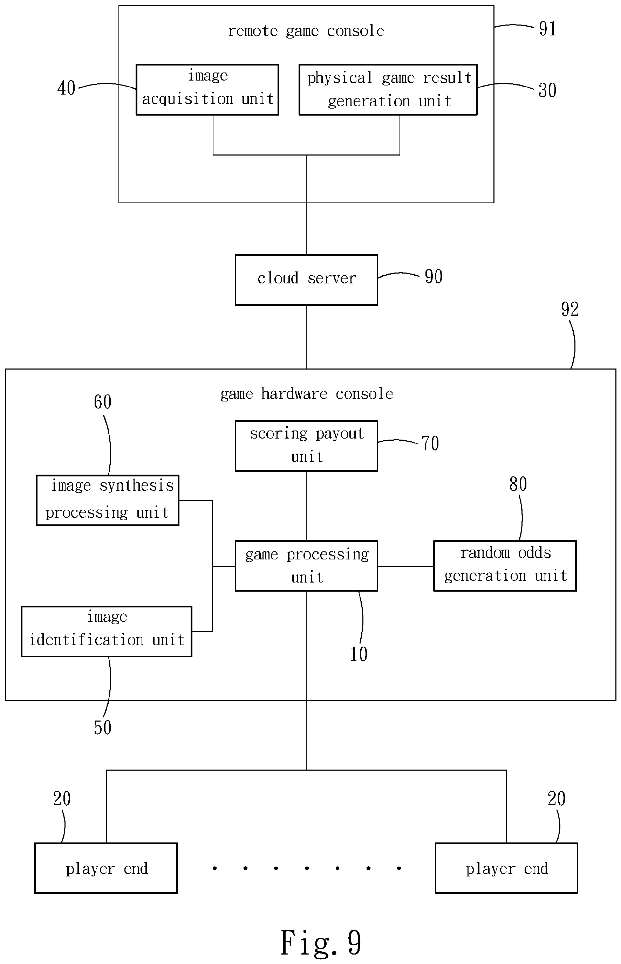

Refer to Fig. 9, in an embodiment; the game system further includes a cloud server 90, a remote game console 91 and a game hardware console 92. The remote game console 91 includes the physical game result generation unit 30 and the image acquisition unit 40, and the game hardware console 92 includes the game processing unit 10, the image identification unit 50, the image synthesis processing unit 60 and the scoring payout unit 70. The game hardware console 92 further includes the random odds generation unit 80. The remote game console 91 and the game hardware console 92 are connected by the cloud server 90, and the at least one player end 20 is connected to the game hardware console 92. Accordingly, only one high-cost physical game result generation unit 30 needs to be provided for connecting a plurality of the game hardware consoles 92 located in different places, and further connecting to the at least one player end 20 for playing. Therefore, multiple players can play in different places at the same time and together participate in the game result generated by the same physical game result generation unit 30. Not only can a setting cost be reduced, but also an entertainment effect that the multiple players play together can be achieved.

## Claims

1. A game system with image synthesis and display comprising:
a game processing unit (10), controlling an operation of a game for at least one player to play the game;
at least one player end (20), respectively including a display screen (21) to display a game picture (22) of the game, the game picture (22) including a plurality of scoring areas (221) and a plurality of odds (222) corresponding to the plurality of scoring areas (221), the at least one player end (20) respectively providing the at least one player to play the game for selecting and making scoring on the plurality of scoring areas (221) within a scoring time to generate a scoring information, and the at least one player end (20) respectively transmitting the scoring information to the game processing unit (10);
a physical game result generation unit (30), notified by the game processing unit (10) to generate a game result according to a preset rule after the scoring time of each round of the game has expired, and the physical game result generation unit (30) transmitting the game result to the game processing unit (10);
an image acquisition unit (40), shooting a real scene of the physical game result generation unit (30) to obtain an instant image (41), and the image acquisition unit (40) transmitting the instant image (41) to the game processing unit (10);
an image identification unit (50), receiving the instant image (41) from the game processing unit (10), the image identification unit (50) recognizing and analyzing a position of the instant image (41) to generate a position information, and the game processing unit (10) transmitting the position information back to the game processing unit (10);
an image synthesis processing unit (60), receiving the at least the scoring information, the instant image (41), and the position information from the game processing unit (10) after the game processing unit (10) receives the at least one scoring information, the image synthesis processing unit (60) generating a virtual real synthetic image (61) according to at least the scoring information, the instant image (41) and the position information, and the virtual real synthetic image (61) transmitted by the game processing unit (10) to the at least one player end (20) to display the virtual real synthetic image (61) on the display screen (21) of the at least one player ends (20) respectively; and
a scoring payout unit (70), paying according to the scoring information of the at least one player, the game result, and the plurality of odds (222) in each round of the game.

2. The game system according to claim 1, wherein the game system further comprises a cloud server (90), a remote game console (91) and a game hardware console (92), the remote game console (91) includes the physical game result generation unit (30) and the image acquisition unit (40), the game hardware console (92) includes the game processing unit (10), the image identification unit (50), the image synthesis processing unit (60) and the scoring payout unit (70), the remote game console (91) and the game hardware console (92) are connected through the cloud server (90), and the at least one player end (20) is respectively connected with the game hardware console (92).

3. The game system according to claim 2, wherein the game hardware console further comprises a random odds generation unit.

4. The game system according to claim 1, wherein the image synthesis processing unit (60) updates the virtual real synthetic image (61) according to the at least one scoring information which is the latest, if the at least one scoring information changes during the scoring time.

5. The game system according to claim 1, wherein the real scene includes a plurality of frames (62) corresponding to the plurality of scoring areas (221), and the image synthesis processing unit (60) reproduces the real scene on the virtual real synthetic image (61), and displays the scoring information on the plurality of frames (62) of the virtual real synthetic image (61).

6. The game system according to claim 5, wherein the image synthesis processing unit (60) updates the virtual real synthetic image (61) according to the at least one scoring information which is the latest, if the at least one scoring information changes during the scoring time, and the image synthesis processing unit (60) displays the at least one scoring information which is the latest on the plurality of frames (62) of the virtual real synthetic image (61).

7. The game system according to claim 6, wherein the game system further comprises a random odds generation unit (80), the random odds generation unit (80) generates a random odds (81) according to a random probability to each of the plurality of scoring areas (221) after the scoring time of each round of the game has expired, the random odds generation unit (80) transmits the random odds (81) to the game processing unit (10), the game processing unit (10) notifies the at least one game picture (22) to replace the odds (222) of the scoring area (221) with the random odds (81), and the scoring payout unit (70) pays according to the scoring information of the at least one player, the game result, the plurality of odds (222) and the random odds (81), and wherein after the game processing unit (10) receives the random odds (81), the image synthesis processing unit (60) generates another virtual real synthetic image (61A) according to the instant image (41), the position information and the random odds (81).

8. The game system according to claim 7, wherein the image synthesis processing unit (60) reproduces the real scene in the virtual real synthetic image (61) and displays the random odds (81) on the plurality of frames (62) of the virtual real synthetic image (61A).

9. The game system according to claim 1, wherein the image synthesis processing unit (60) generates the virtual real synthetic image (61) only after the scoring time has expired.

10. The game system according to claim 9, wherein the game system further comprises a random odds generation unit (80), the random odds generation unit (80) generates a random odds (81) according to a random probability to each of the plurality of scoring areas (221) after the scoring time of each round of the game has expired, the random odds generation unit (80) transmits the random odds (81) to the game processing unit (10), the game processing unit (10) notifies the at least one game picture (22) to replace the odds (222) of the scoring area (221) with the random odds (81), and the scoring payout unit (70) pays according to the scoring information of the at least one player, the game result, the plurality of odds (222) and the random odds.

11. The game system according to claim 10, wherein after the game processing unit (10) receives the at least one scoring information or the random odds (81), the image synthesis processing unit (60) generates the virtual real synthetic image (61) according to the instant image (41), the position information, the at least one scoring information and the random odds (81).

12. The game system according to claim 11, wherein the real scene includes a plurality of frames (62) corresponding to the plurality of scoring areas (221), and the image synthesis processing unit (60) reproduces the real scene on the virtual real synthetic image (61), and displays the random odds (81) on the plurality of frames (62) of the virtual real synthetic image (61).

13. The game system according to claim 11, wherein the real scene includes a physical scoring table (33) corresponding to the plurality of scoring areas (221), the image synthesis processing unit (60) reproduces the real scene on the virtual real synthetic image (61), and displays the random odds (81) on the physical scoring table (33) of the virtual real synthetic image (61).

14. The game system according to claim 1, wherein the at least one player end (20) includes a game operation interface (23) respectively, the at least one game operation interface (23) is operated by the at least one player to generate an operation information, and each the at least one game operation interface (23) includes a plurality of scoring options (231) and at least one function operation option (232) for making scoring on the plurality of scoring areas (221), and wherein the operation information includes a function control signal and the at least one scoring information, the function control signal is generated by the player operating the at least one function operation option to control the operation of the game system, and the at least one scoring information is generated by the player operating the plurality of scoring options (231).
